# EUROPÄISCHE PATENTSCHRIFT

(11) **EP 1 542 525 B1**
(45) Veröffentlichungstag und Bekanntmachung des Hinweises auf die Patenterteilung: **19.04.2006**
(21) Anmeldenummer: 03769324.9
(22) Anmeldetag: 25.09.2003
(51) Int. Cl.: A01C 17/00

(54) **SCHLEUDERDÜNGERSTREUER**
CENTRIFUGAL FERTILISER DISTRIBUTOR
DISTRIBUTEUR D'ENGRAIS CENTRIFUGE

(30) Priorität: 28.09.2002 DE 10245374; 30.05.2003 DE 10324647
(43) Veröffentlichungstag der Anmeldung: 22.06.2005
(73) Patentinhaber: Amazonen-Werke H. Dreyer GmbH & Co. KG, 49202 Hasbergen (DE)
(72) Erfinder: DREYER, Heinz, 49205 Hasbergen (DE); DREYER, Justus, 49205 Hasbergen (DE); WALTER, Achim, 49078 Osnabrück (DE)
(86) Internationale Anmeldenummer: PCT/EP2003/010695
(87) Internationale Veröffentlichungsnummer: WO 2004/030441

(56) Entgegenhaltungen:
- DE-A- 1 457 867
- FR-A- 1 226 288
- GB-A- 1 045 370
- US-A- 2 031 540

## Beschreibung

Die Erfindung betrifft einen Schleuderdüngerstreuer mit einem Rahmen, Vorratsbehälter und zumindest zwei Dosierorganen, unter denen rotierend angetriebene und mit Wurfschaufeln besetzte Schleuderscheiben angeordnet sind.

Durch die deutsche Patentschrift 30 49 070 ist ein Schleuderdüngerstreuer bekannt geworden, der einen Vorratsbehälter aufweist, der als Doppeltrichter ausgebildet ist. Jedem Trichter ist ein Dosierorgan zugeordnet. Über diese Dosierorgane wird das sich in dem Vorratsbehälter befindliche Düngermaterial rotierend angetriebenen Schleuderscheiben zugeführt. Diese Schleuderscheiben verteilen das Düngemittel in Breitverteilung über die Bodenoberfläche. Eine dieser Schleuderscheiben kann gegen eine sog. Grenzstreuscheibe ausgetauscht werden, um auf der zu der Grenze zugewandten Seite ein Streubild mit einer steil abfallenden Streuflanke zu erzeugen. Der Austausch einer Normalstreuscheibe gegen eine Grenzstreuscheibe zum Grenzstreuen hat sich in der Praxis bewährt, weil sich mit einer Grenzstreuscheibe, vor allem wenn sie auf verschiedene Grenzstreubreiten abstimmbar ist, eine sehr genau definierte Lage der steil abfallenden Streukante erzielen lässt, so dass der Dünger sehr genau mit einer vorbestimmten Streustärke an die Grenze herangeworfen werden kann, ohne das Dünger über die Grenze hinaus gelangt. Nachteilig ist bei einem derartigen Austausch der Grenzstreuscheibe, dass dieser Austausch von Hand vorgenommen werden muss. Dieses wird als Komfortnachteil angesehen.

Durch das deutsche Gebrauchsmuster 1 757 835 ist eine doppelstöckige Schleuderscheibe bekannt. Die untere Schleuderscheibe weist mit ihren Wurfschaufeln einen größeren wirksamen Umlaufradius als die obere Schleuderscheibe mit ihren Wurfschaufeln auf. Die obere Schleuderscheibe weist eine Durchlassöffnung auf, durch die der Dünger von dem Dosierorgan des Vorratsbehälters zu der unteren Schleuderscheibe gelangt. Mittels dieser Doppelstreuscheibe soll eine sorgfältige Verteilung des Düngers und eine sehr große Gleichmäßigkeit des Streubildes erreicht werden. Ein Grenzstreuen ist jedoch mit dieser Streuscheibe nicht vorgesehen und nicht möglich.

Durch die deutsche Offenlegungsschrift 197 17 286 ist ein Schleuderdüngerstreuer mit zwei Doppelstreuscheiben bekannt, wobei die Schleuderscheiben übereinander angeordnet sind und deren Drehachsen zusammenfallen. Die obere Schleuderscheibe weist eine Durchlassöffnung auf, durch die das Material von der Dosieröffnung zu der unteren Scheibe mittels Leitelementen leitbar ist. Jeder Schleuderscheibe werden unterschiedliche Sorten Düngemittel zugeführt. Die Wurfschaufeln beider Schleuderscheiben weisen gleiche wirksame Umlaufbahnen auf. Ein Grenzstreuen ist mittels dieser Wurfscheibe nicht möglich.

Durch die deutsche Auslegeschrift 1 457 867 ist eine mehrstöckige Schleuderscheibe bekannt, deren Schleuderscheiben mit Wurfelementen in drei Ebenen angeordnet sind. Diesen Schleuderscheiben werden jeweils die Düngemittel durch in den Schleuderscheiben angeordneten Durchlassöffnungen zugeleitet. Mit dieser mehrstöckigen Schleuderscheibe soll eine gleichmäßige Düngerverteilung erreicht werden. Ein Grenzstreuen ist hiermit nicht vorgesehen und nicht möglich.

Derartige Schlenderdüngerstreuer sind auch aus den Dokumenten FR-A-1 226 288 und GB-A- 1045370 bekannt.
Der Erfindung liegt die Aufgabe zugrunde, einen Schleuderdüngerstreuer zu schaffen, der in einfacher Weise von Normal- auf Grenzstreuen und umgekehrt umzustellen ist, ohne dass Schleuderscheiben ausgetauscht oder zusätzliche Grenzstreuschirme eingesetzt werden müssen.

Diese Aufgabe wird erfindungsgemäß durch die Merkmale der Patentansprüche 1 oder 2 gelöst. Infolge dieser Maßnahmen sind Normal- und Grenzstreuscheiben unmittelbar übereinander angeordnet und der Schleuderdüngerstreuer ist durch die entsprechende Zugführung des Materials zu der oberen oder unteren Streuerscheibe einfach von Normal- auf Grenzstreuen umzustellen. Hierbei kann entweder gemäß Anspruch 1 das Leitelement verstellt werden oder gemäß Anspruch 2 das Dosierorgan zu der Schleuderscheibe oder die Schleuderscheibe zu dem Dosierorgan entsprechend eingestellt werden. Die Ausbildungen der Normal- und Grenzstreuscheiben sind in den Ansprüchen 3-6 beschrieben.

In bevorzugter Weise sind die Schleuderscheiben der Doppelscheibe drehfest miteinander verbunden.

Hierbei ist es möglich, dass die Verbindungselemente zwischen beiden Scheiben der Doppelscheiben zumindest teilweise von den Wurfschaufeln der unteren Schleuderscheibe gebildet werden. Hierdurch ergibt sich eine sehr kompakte und einfach ausgeführte Doppelschleuderscheibe.

In einfacher Weise lassen sich bei einer Doppelschleuderscheibe Grenzstreuscheibe und Normalstreuscheibe entsprechend der Merkmale des Anspruches 9 ausbilden.

Um eine vorteilhafte Umstellung des Leitorgans und eine entsprechende Zuführung des Materials der oberen oder unteren Streuscheibe in einfacher Weise zu erreichen, ist ein Leitelement vorgesehen, welches gemäß den Merkmalen der Ansprüche 10-12 angeordnet sein kann.

Um der unteren Streuscheibe und den Wurfschaufeln der Streuscheibe das Materialgut in besonders guter Weise zuführen zu können, ist vorgesehen, dass der unteren Schleuderscheibe eine kegelförmige und nach oben ragende Erhöhung zugeordnet ist und dass die aufrechte Achse der kegelförmigen Erhöhung mit der Drehachse mit der Doppelscheibe zusammenfällt. Die kegelförmige Erhöhung, kann auch kegelstumpfförmig oder pyramidenstumpfförmig ausgebildet sein. In einigen Fällen kann es vorteilhaft sein, dass das Leitelement mehrere den Materialstrom in Richtung der Schleuderscheibe auffächernde Leitflächen aufweist. Hierdurch kann für manche Düngersorten eine gleichmäßige Streugutverteilung auf der Bodenoberfläche erreicht werden.

Insbesondere für größere Arbeitsbreiten kann es vorteilhaft sein, dass das Leitelement mehrere den Materialstrom in Richtung der Schleuderscheiben aufteilende Leitflächen aufweist.

Es ist auch möglich, das Leitorgan nicht am Vorratsbehälter oder am Rahmen anzuordnen, sondern der Schleuderscheibe zuzuordnen, so dass das Leitorgan mitdrehen kann. Das Leitorgan lässt sich dann entsprechend verstellen, um in gewünschter Weise der jeweiligen Schleuderscheibe für das entsprechende Streuverfahren (Normal- und Grenzstreuen)das Material zuzuführen.

Um der jeweiligen Schleuderscheibe das Material zuzuführen, kann die Schleuderscheibe mit ihrer Antriebsvorrichtung in horizontaler oder vertikaler Ebene verschiebbar sein.

Ebenfalls ist es möglich, das Leitorgan nach oben oder unten zu verschieben und zwar in einer vertikalen oder horizontalen Ebene oder seitwärts.

Auch ist es möglich, den als Leitorgan ausgebildeten Kegel nach oben oder unten zu verschieben, um so das Material entweder der oberen oder der unteren Schleuderscheiben zuzuleiten.

Um Möglichkeiten aufzuzeigen, so dass in einfacher Weise eine Arbeitsbreitenanpassung sowohl beim Grenzstreuen wie beim Normalstreuen möglich ist, sind die kennzeichnende Merkmal des Anspruches 19 vorgesehen. Infolge dieser Maßnahme kann die Arbeitsbreite des Schleuderdüngerstreuers in einfacher Weise an die vorhandenen Streugegebenheiten angepasst werden.

Eine einfache Einstellung und/oder Veränderung der Drehzahl der Schleuderscheiben lässt sich dadurch erreichen, dass die Mittel als in ihrer Drehzahl einstellbare Hydraulikmotoren und/oder -pumpen mit entsprechender Regeleinrichtung ausgebildet sind.

In einer anderen Ausführungsform ist zur Erreichung der Einstellung und Veränderung der Drehzahl vorgesehen, dass die Mittel als drehzahlveränderbares mechanisches Getriebe, wie beispielsweise Zahnradgetriebe, Variatorgetriebe mit Keilriemen oder Gliederketten, etc. ausgebildet sind.

Ob in einfacher Weise die gewünschte Drehzahl zur Erreichung der erforderlichen Arbeitsbreite genau eingehalten wird und diese einstellen zu können, ist vorgesehen, dass mittels der elektronischen Regeleinrichtung die Drehzahl der jeweiligen Schleuderscheibe einstellbar ist.

Um eine automatische Einstellung des Schleuderdüngerstreuers an die Einsatzbedingungen ohne Eingriff des Fahrers zu erreichen, ist vorgesehen, dass in der elektronischen Regeleinrichtung Daten über die Größe, Form und/ oder Kontur des Feldes eingespeichert sind und das an Hand dieser gegebenen Daten mittels eines Standortbestimmungssystems (beispielsweise DGPS) über die elektronische Regeleinrichtung die Drehzahl der jeweiligen Schleuderscheiben einstellbar ist.

Weitere Einzelheiten der Erfindung sind der Beispielsbeschreibung und den Zeichnungen zu entnehmen.

Hierbei zeigen
- Fig. 1: einen Schleuderdüngerstreuer in der Ansicht von hinten und in Prinzipdarstellung,
- Fig. 2: die rechte Dosier- und Verteileinheit in vergrößertem Maßstab in der Ansicht von hinten und in Prinzipdarstellung in der Einstellung für das Grenzstreuen,
- Fig. 3: die Dosier- und Verteileinheit gemäß Fig. 2 in der Einstellung für das Normalstreuen,
- Fig. 4: einen weiteren Schleuderdüngerstreuer in der Ansicht von hinten und in Prinzipdarstellung,
- Fig. 5: die rechte Dosier- und Verteileinheit des Schleuderdüngerstreuers gemäß Fig. 4 in der Einstellung für das Normalstreuen in der Ansicht von hinten und in der Prinzipdarstellung und vergrößerter Darstellung,
- Fig. 6: die Verteil- und Dosiereinheit in gleicher Darstellungsweise wie Fig. 5, jedoch in der Einstellung für das Grenzstreuen,
- Fig. 7: einen weiteren Schleuderdüngerstreuer in der Ansicht von hinten und in Prinzipdarstellung,
- Fig. 8: die rechte Dosier- und Verteileinheit in der Ansicht von hinten und in Prinzipdarstellung, in vergrößerter Darstellung, in der Einstellung für das Grenzstreuen,
- Fig. 9: die Dosiereinheit in gleicher Darstellung wie Fig. 8, jedoch in der Einstellung für das Normalstreuen,
- Fig. 10: die rechte Dosier- und Verteileinheit eines weiteren Schleuderdüngerstreuers in der Ansicht von hinten und in Prinzipdarstellung entsprechend der Darstellung nach Fig. 2,
- Fig. 11: die Dosiereinheit in gleicher Darstellung wie Fig. 10, jedoch in der Einstellung für das Normalstreuen und
- Fig. 12: den Schleuderdüngerstreuer in der Ansicht von hinten und in Prinzipdarstellung

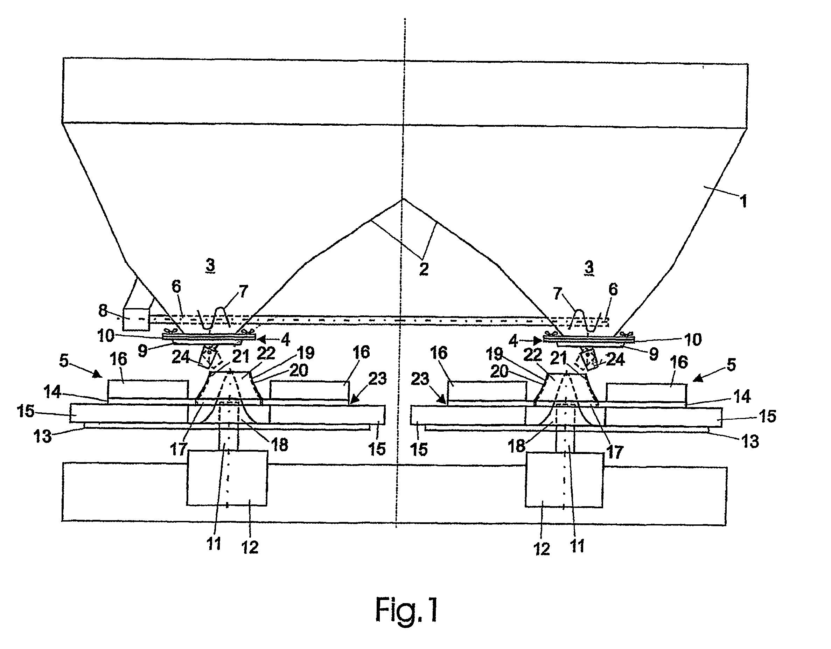

Der Schleuderdüngerstreuer gemäß den Fig. 1 bis 3 weist den Vorratsbehälter 1 auf, der durch das dachförmige Mittelteil 2 in zwei Auslauftrichter 3 aufgeteilt ist. Die Auslauftrichter 3 werden jeweils durch ein Dosierorgan 4 nach unten verschlossen. Mittels dieser Dosierorgane 4 lässt sich in einstellbaren Mengen den unterhalb der Dosierorgane 4 angeordneten Schleuderscheiben 5 das Material in einstellbaren Mengen zuführen. Oberhalb der Dosierorgane 4 ist in den Auslauftrichtern 3 die Rührwelle 6 mit den Rührorganen 7 angeordnet. Die Rührwelle 6 wird mittels des Antriebsorgans 8 motorisch angetrieben. Im Ausführungsbeispiel sind die Dosierorgane 4 als mittels Schieber 9 in ihrer Öffnungsweite einstellbare Auslauföffnungen, die sich in der Bodenplatte 10 der Auslauftrichter 3 befindet, ausgebildet.

Die Schleuderscheiben 5 sind als Doppelschleuderscheiben ausgebildet und auf einer aufrecht angeordneten und rotierend angetriebenen Antriebswelle 11 drehfest angeordnet. Die Antriebselemente 12 für die Schleuderscheiben 5 sind im Ausführungsbeispiel als Hydraulikmotoren ausgebildet, die über nicht darstellte Hydraulikleitungen und Regelorgane mit einer Hydraulikpumpe oder Hydraulikanlage verbunden sind.

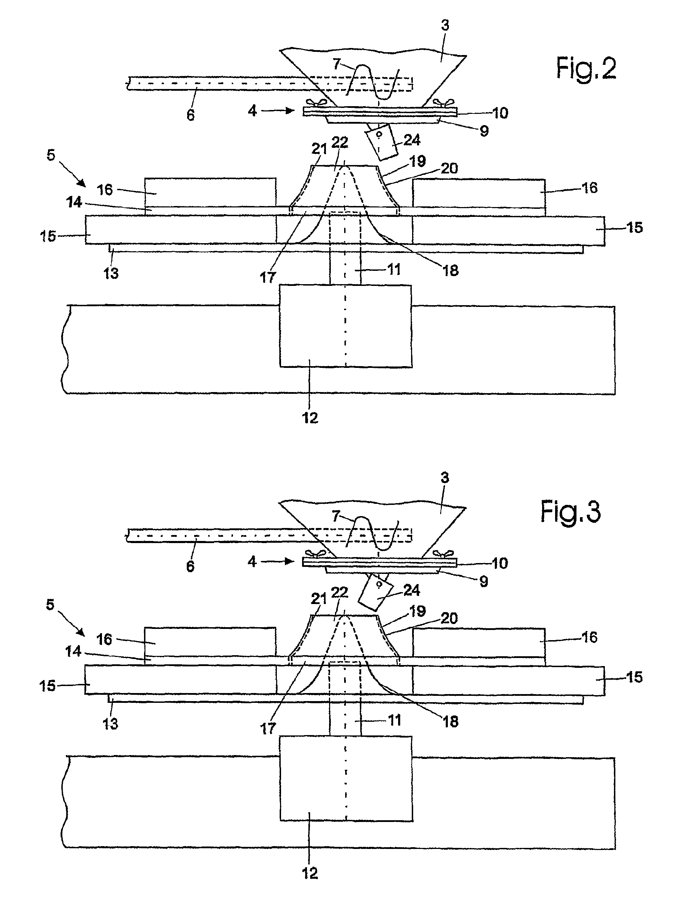

Die Schleuderscheiben 5 sind als Doppelschleuderscheiben ausgebildet. Die Doppelschleuderscheiben 5 weisen die untere Schleuderscheibe 13 und die obere Schleuderscheibe 14 auf. Die untere Schleuderscheibe 13 weist einen größeren Durchmesser als die obere Schleuderscheibe 14 auf. Die auf der unteren Schleuderscheibe 13 angeordneten Wurtschaufeln 15 sind länger als die auf der oberen Schleuderscheibe 14 angeordneten Wurfschaufeln 16. Die obere Schleuderscheibe 14 weist die Durchtrittsöffnung 17 auf. Des weiteren ist auf der unteren Schleuderscheibe 13 der Leitkegel 18 angeordnet und auf der oberen Schleuderscheibe 14 ist der Kegelstumpf 19 angeordnet. Hierbei ist der Kegelstumpf 19 derart in bezug auf die Durchtrittsöffnung 17 angeordnet, dass die Außenfläche 20 des Kegelstumpfes 19 die Durchtrittsöffnung 17 gegenüber den sich ergebenden Scheibenring der oberen Schleuderscheibe 14 verschließt. Zwischen der Innenfläche 21 des Kegelstumpfes 19 und dem Leitkegel 18 befindet sich ein Durchtrittsbereich 22, so dass das Material von dem Dosierorgan 4 zu der unteren Schleuderscheibe 13 gelangen kann. Die obere Schleuderscheibe 14 ist mit der unteren Schleuderscheibe 13 durch Verbindungselemente 23 drehfest verbunden. Im Ausführungsbeispiel werden diese Verbindungselemente 23 von den auf der unteren Schleuderscheibe 13 angeordnet Wurfschaufeln 15 gebildet. Zwischen den Schleuderscheiben 13 und 14 und dem Dosierorgan 4 ist ein verstellbares Leitelement 24 angeordnet. In der in Fig. 1 mit durchzogenen Linien dargestellte Position und entsprechend der Darstellung in Fig. 2 ist das Leitelement 24 so dargestellt, dass über die Außenfläche 20 des Leitkegels 19 der oberen Schleuderscheibe 14 und den Wurfschaufeln 16 der oberen Schleuderscheibe 14 das Material zugeführt wird. Dieses Leitelement 24 ist mittels nicht dargestellter Einstellmittel, die auch motorisch ausgebildet sein können, in die in Fig. 1 mit gestrichelten Linien dargestellten Position und der in Fig. 3 dargestellten Position umstellbar, so dass das sich im Vorratsbehälter 1 befindliche Material über das Dosierorgan 4 und dem Leitelement 24 und der sich zwischen dem Kegelstumpf 19 und dem Kegel 20 befindlichen Durchtrittsbereich 22 das Material der unteren Schleuderscheibe 13 und deren Wurfschaufeln 15 zugeleitet wird.

Die obere Schleuderscheibe 14 mit den Wurfschaufeln 16 ist als Grenzstreuscheibe ausgebildet, während die untere Schleuderscheibe 13 mit den unteren Wurtschaufeln 15 als Normalstreuscheibe ausgebildet ist. Mittels der Grenzstreuscheibe 14 lässt sich ein im Außenbereich eine steil abfallende Streuflanke aufweisendes Streubild, ein sog. Grenzstreubild oder Randstreubild erzielen. Mit der unteren Normalstreuscheibe 13 mit den Wurfschaufeln 15 lässt sich ein Normalstreubild mit flach abfallenden Streuflanken zwecks Überlappung nebeneinanderliegender Streubahnen erzielen.

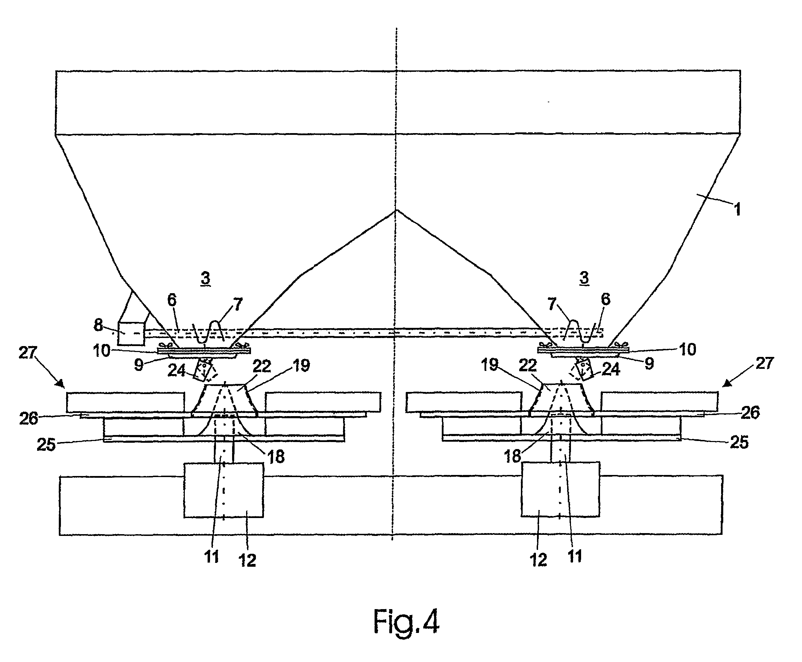

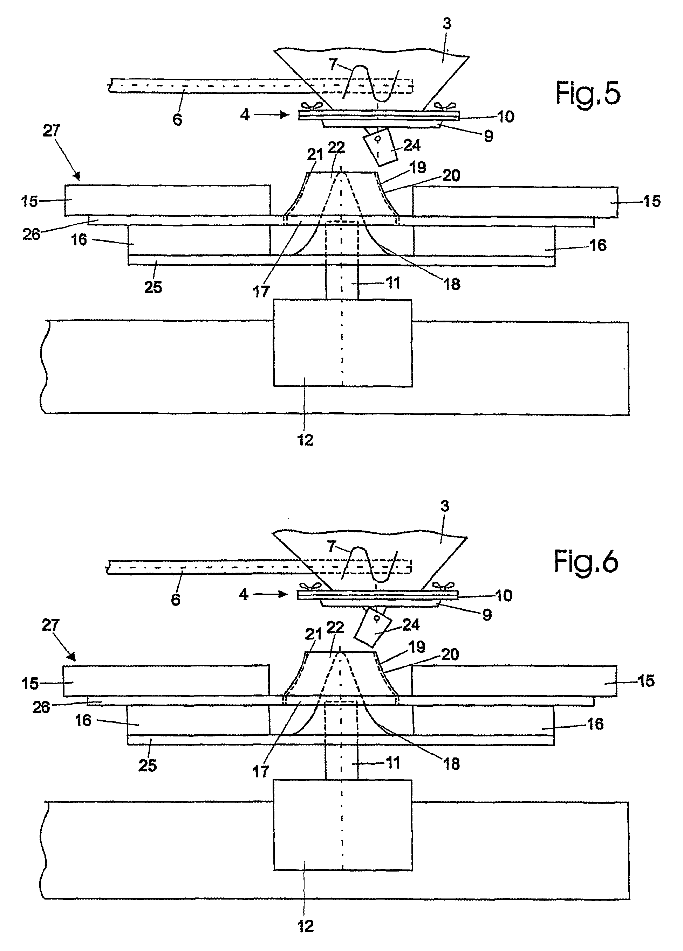

Das Ausführungsbeispiel nach den Fig. 4 bis 6 unterscheidet sich von den Ausführungsbeispielen nach den Fig. 1 und 3 dadurch, dass die kleineren Schleuderscheiben 25 unterhalb der größeren Schleuderscheibe 26 der Doppelscheibe 27 angeordnet ist. Auf der unteren Schleuderscheibe 25 sind die kürzeren Wurfschaufeln 16 und auf der oberen Schleuderscheibe 15 die längeren Wurfschaufeln 15 für das Normalstreuen angeordnet. Somit ist die untere Schleuderscheibe 25 mit den zugeordneten Wurfschaufeln 16 als Grenzstreuscheibe und die obere Schleuderscheibe 26 mit den zugeordneten Wurfschaufeln 15 als Normalstreuscheibe ausgebildet. In der oberen Schleuderscheibe 26 ist die Durchtrittsöffnung 17 angeordnet. Auf der unteren Schleuderscheibe 25 ist der Leitkegel 18 und auf der oberen Schleuderscheibe 26 ist der Kegelstumpf 19 angeordnet. Zwischen dem Leitkegel 18 und dem Kegelstumpf 19 befindet sich ebenfalls eine Durchtrittsöffnung 20. Das Leitelement 24, welches an den Dosierorganen angeordnet ist, ist entsprechend Fig. 5 so angestellt, dass der Dünger der oberen, d.h. der Normalstreuscheibe 26 zugeführt wird, während das Leitelement 24 entsprechend Fig. 6 so eingestellt ist, dass das Material von dem Dosierorgan der unteren Schleuderscheibe 25 zum Grenzstreuen zugeleitet wird.

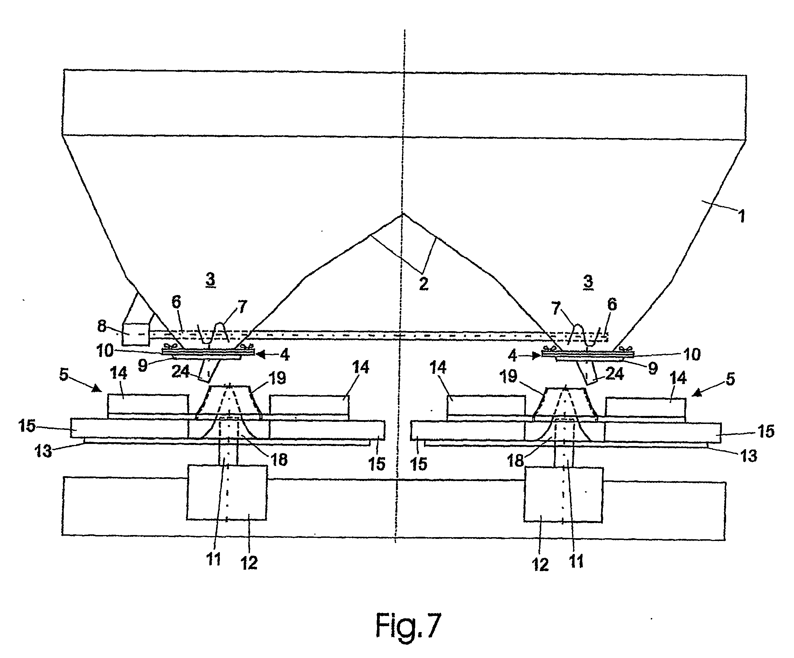

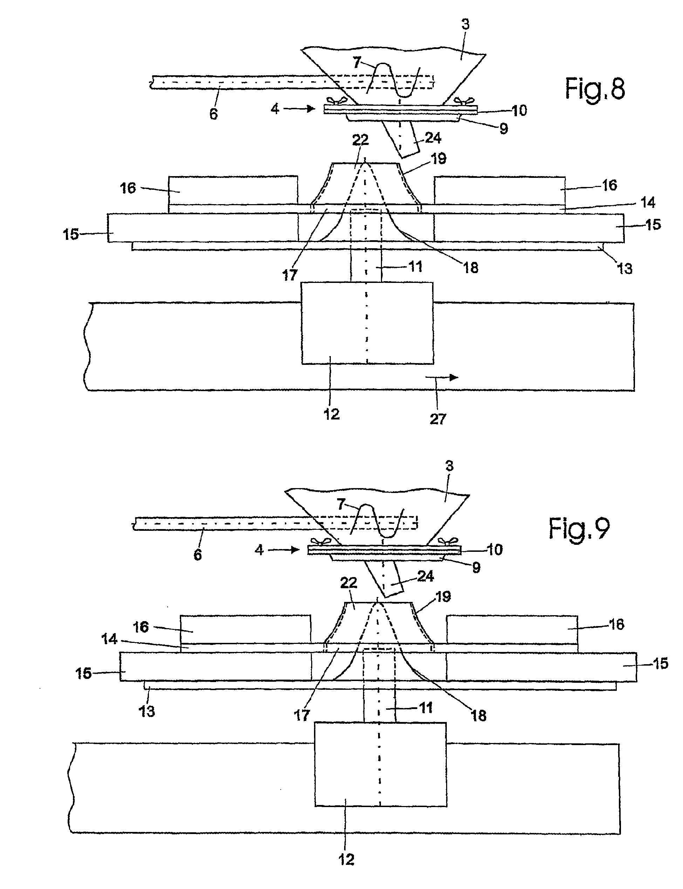

Das Ausführungsbeispiel nach den Fig. 7 bis 9 unterscheidet sich von den vorhergehenden Ausführungsbeispielen dadurch, dass das Leitorgan 24 fest an dem Dosierorgan 4 angeordnet ist, während das Antriebselement 12 mit den Schleuderscheiben 5,13,14 gegenüber dem Dosierorgan 4 und den Leitungen 24 verschiebbar ist. Die Schleuderscheiben 5,13,14 gemäß den Fig. 7 bis 8 sind entsprechend den Schleuderscheiben 5,13,14 gemäß den Fig. 1 bis 3 ausgebildet. Gemäß der Einstellung nach Fig. 8 ist die Zuordnung des Leitorgans 24 zu den Schleuderscheiben 5,13,14 derart, dass über das Leitelement 24 den oberen Schleuderscheiben 14 und den darauf angeordneten Wurfschaufeln 16 das Material zugeführt wird. Mittels dieser Schleuderscheiben lässt sich ein Grenzstreubild erzielen. Um Normal zu streuen, wird die Schleuderscheibe 5,13,14 mit dem Antriebselement 12 in Pfeilrichtung 27 aus der in Fig. 8 dargestellten Position in die in Fig. 9 dargestellte Position verschoben. Hierdurch wird über das Leitelement 24 den unteren Schleuderscheiben 13 und der darauf angeordneten Wurfschaufeln 15 das Material zugeleitet. Die Verstellung bzw. Verschiebung des Antriebselementes 12 mit den Schleuderscheiben kann von Hand oder auch mittels eines nicht dargestellten motorischen Einfüllelementes über eine Fernbedienungs- oder elektronische Steuereinrichtung erfolgen.

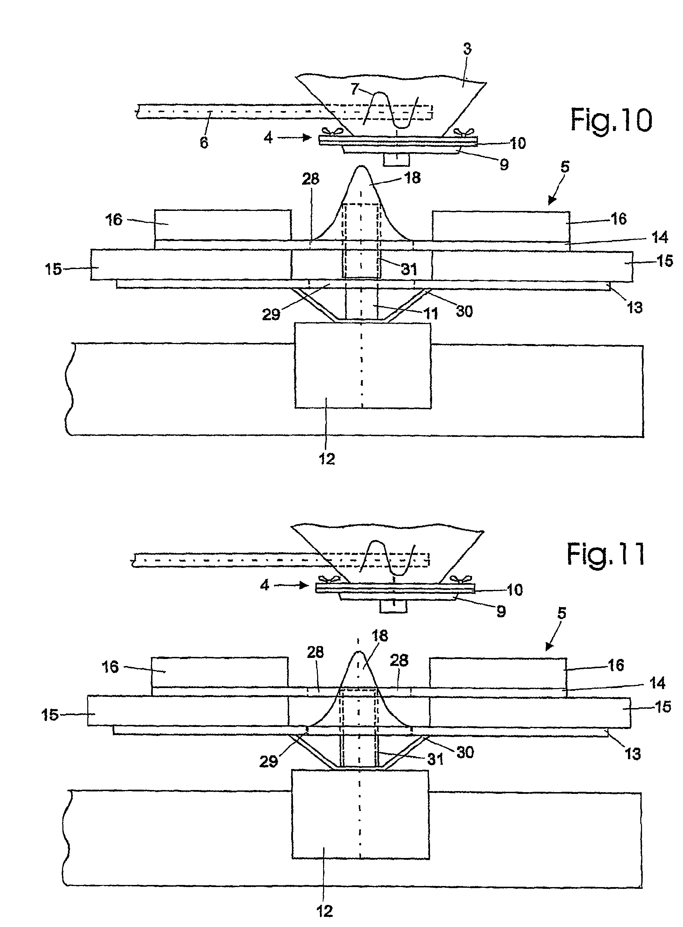

Das Ausführungsbeispiel gemäß den Fig. 10 und 11 unterscheidet sich von den Ausführungsbeispielen gemäß Fig. 1 bis 3. Der Unterschied liegt darin, dass die Umstellung der Düngerzuführung des Düngers wahlweise zu der unteren Schleuderscheibe 13 oder oberen Schleuderscheibe 14 durch die Verschiebung des Leitkegels 18 nach oben oder unten erfolgt. Hierzu weisen sowohl die untere 13 wie die obere Schleuderscheibe 14 entsprechende Aussparungen 28 und 29 auf, so dass der Leitkegel 18 entsprechend verschoben werden kann. In der in Fig. 10 dargestellten Position befindet sich der Leitkegel 18 in der nach oben geschobenen Position, so dass in dieser Position der oberen Schleuderscheibe 14 von dem Dosierorgan 4 das Material zugeleitet wird. Da die obere Schleuderscheibe 14 mit ihren Wurfschaufeln 16 als Grenzstreuscheibe ausgebildet ist, wird in dieser Position das Grenzstreuen durchgeführt.

Um das Normalstreuen durchführen zu können bzw. das Material der unteren Schleuderscheibe 13 zuführen zu können, wird der Leitkegel 18 nach unten in die in Fig. 11 dargestellte Position verschoben. In dieser Position wird über den Leitkegel 18 das Material der unteren Schleuderscheibe 13 und den darauf angeordneten Wurfschaufeln 15 zugeleitet. In dem Ausführungsbeispiel ist die untere Schleuderscheibe 13 der Doppelschleuderscheibe 5 mit den darauf angeordneten Wurfschaufeln 15 als Normalstreuscheibe ausgebildet.

Die Scheiben 14 und 13 sind über die Wurfschaufein 15 drehfest miteinander verbunden. Über die Verbindungselemente 30 ist die Schleuderscheibe 13 und somit die Doppelscheibe 5 mit der Welle 11 drehfest verbunden. Der Leitregler 18 ist über die Buchse 31 verschiebbar in unterschiedlichen Positionen, zumindest in der oberen und unteren Position, wahlweise auf der Antriebswelle festsetzbar angeordnet. Hierzu können entsprechende Festsetzungsmittel vorgesehen sein.

Es ist auch möglich, die Verschiebung des Leitkegels in die obere und untere Position mittels geeigneter Fernbedienungselemente und/oder motorischer Einstellelemente durchzuführen.

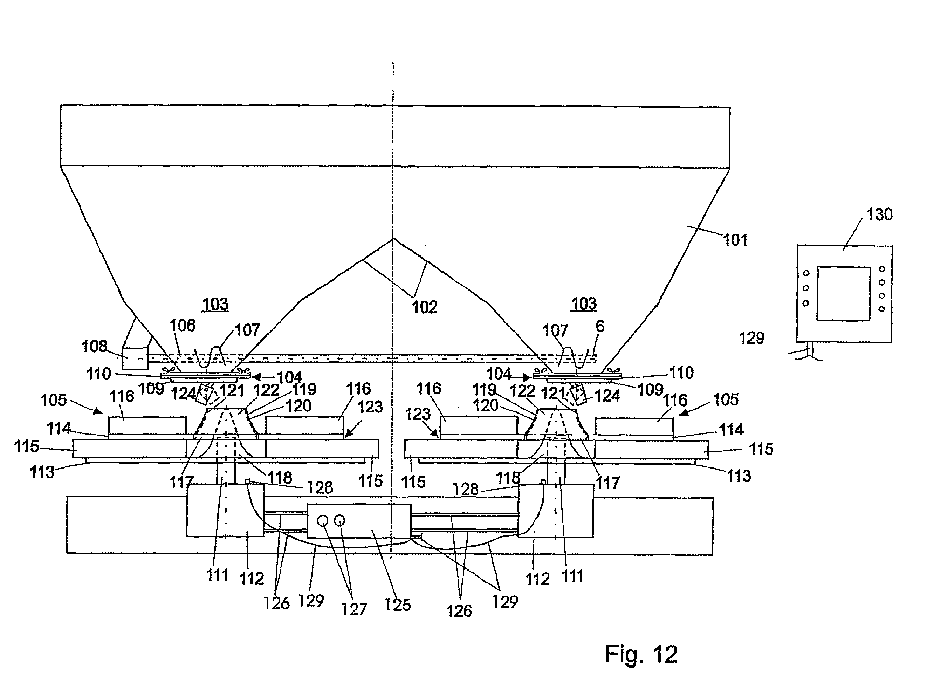

Der Schleuderdüngerstreuer gemäß Fig. 12 weist den Vorratsbehälter 101 auf, der durch das dachförmige Mittelteil 102 in zwei Auslauftrichter 103 aufgeteilt ist. Die Auslauftrichter 103 werden jeweils durch ein Dosierorgan 104 nach unten verschlossen. Mittels dieser Dosierorgane 104 lässt sich in einstellbaren Mengen den unterhalb der Dosierorgane 104 angeordneten Schleuderscheiben 105 das Material in einstellbaren Mengen zuführen. Oberhalb der Dosierorgane 104 ist in den Auslauftrichtern 103 die Rührwelle 106 mit den Rührorganen 107 angeordnet. Die Rührwelle 106 wird mittels des Antriebsorgans 108 motorisch angetrieben. Im Ausführungsbeispiel sind die Dosierorgane 104 als mittels Schieber 109 in ihrer Öffnungsweite einstellbare Auslauföffnungen, die sich in der Bodenplatte 110 der Auslauftrichter 103 befindet, ausgebildet.

Die Schleuderscheiben 105 sind als Doppelschleuderscheiben ausgebildet und auf einer aufrecht angeordneten und rotierend angetriebenen Antriebswelle 111 drehfest angeordnet. Die Antriebselemente 112 für die Schleuderscheiben 105 sind im Ausführungsbeispiel als Hydraulikmotoren ausgebildet, die über nicht darstellte Hydraulikleitungen und Regelorgane mit einer Hydraulikpumpe oder Hydraulikanlage verbunden sind.

Die Schleuderscheiben 105 sind als Doppelschleuderscheiben ausgebildet. Die Doppelschleuderscheiben 105 weisen die untere Schleuderscheibe 113 und die obere Schleuderscheibe 114 auf. Die untere Schleuderscheibe 113 weist einen größeren Durchmesser als die obere Schleuderscheibe 114 auf. Die auf der unteren Schleuderscheibe 113 angeordneten Wurfschaufeln 115 sind länger als die auf der oberen Schleuderscheibe 114 angeordneten Wurfschaufeln 116. Die obere Schleuderscheibe 114 weist die Durchtrittsöffnung 117 auf. Des weiteren ist auf der unteren Schleuderscheibe 113 der Leitkegel 118 angeordnet und auf der oberen Schleuderscheibe 114 ist der Kegelstumpf 119 angeordnet. Hierbei ist der Kegelstumpf 119 derart in bezug auf die Durchtrittsöffnung 117 angeordnet, dass die Außenfläche 120 des Kegelstumpfes 119 die Durchtrittsöffnung 117 gegenüber den sich ergebenden Scheibenring der oberen Schleuderscheibe 114 verschließt. Zwischen der Innenfläche 121 des Kegelstumpfes 19 und dem Leitkegel 118 befindet sich ein Durchtrittsbereich 122, so dass das Material von dem Dosierorgan 104 zu der unteren Schleuderscheibe 113 gelangen kann. Die obere Schleuderscheibe 114 ist mit der unteren Schleuderscheibe 113 durch Verbindungselemente 123 drehfest verbunden. Im Ausführungsbeispiel werden diese Verbindungselemente 123 von den auf der unteren Schleuderscheibe 113 angeordnet Wurfschaufeln 115 gebildet. Zwischen den Schleuderscheiben 13 und 114 und dem Dosierorgan 104 ist ein verstellbares Leitelement 124 angeordnet. In der mit durchzogenen Linien dargestellte Position und entsprechend der Darstellung der DE-P 102 45 374 ist das Leitelement 124 so dargestellt, dass über die Außenfläche 120 des Leitkegels 119 der oberen Schleuderscheibe 114 und den Wurfschaufeln 116 der oberen Schleuderscheibe 114 das Material zugeführt wird. Dieses Leitelement 124 ist mittels nicht dargestellter Einstellmittel, die auch motorisch ausgebildet sein können, in die mit gestrichelten Linien dargestellten Position und der DE-P 102 45 374 dargestellten Position umstellbar, so dass das sich im Vorratsbehälter 101 befindliche Material über das Dosierorgan 104 und dem Leitelement 124 und der sich zwischen dem Kegelstumpf 119 und dem Kegel 120 befindlichen Durchtrittsbereich 122 das Material der unteren Schleuderscheibe 113 und deren Wurfschaufeln 115 zugeleitet wird.

Die obere Schleuderscheibe 114 mit den Wurfschaufeln 116 ist als Grenzstreuscheibe ausgebildet, während die untere Schleuderscheibe 113 mit den unteren Wurfschaufeln 115 als Normalstreuscheibe ausgebildet ist. Mittels der Grenzstreuscheibe 114 lässt sich ein im Außenbereich eine steil abfallende Streuflanke aufweisendes Streubild, ein sog. Grenzstreubild oder Randstreubild erzielen. Mit der unteren Normalstreuscheibe 113 mit den Wurfschaufeln 115 lässt sich ein Normalstreubild mit flach abfallenden Streuflanken zwecks Überlappung nebeneinanderliegender Streubahnen erzielen.

Den Hydraulikmotoren 112 ist das Regelventil 125 zugeordnet. Das Regelventil 125 ist über die Leitungen 126 mit den Hydraulikmotoren 112 verbunden. Weiterhin ist das Regelventil 125 über Verbindungsleitungen 127 mit einer Hydraulikanlage verbunden. Über das Regelventil 125 können die Hydraulikmotoren 112 mit gleicher oder auch mit oder auch mit unterschiedlicher Drehzahl entsprechend angetrieben werden. Den Schleuderscheibenantriebswellen 111 bzw. Schleuderscheiben 113, 114 ist jeweils ein Sensor 128 zur Ermittlung der Drehzahl der Schleuderscheiben 113, 114 zugeordnet. Sowohl das Regelventil 125 wie auch die Drehzahlsensoren 128 sind über Übertragungsleitungen 129 mit der elektronischen Regeleinrichtung 130 verbunden. Die elektronische Regeleinrichtung 130 werden die entsprechenden Steuer- und Regelbefehle an das Regelventil 125 übermittelt, so dass die jeweils gewünschte Drehzahl der Schleuderscheiben 113,114 eingestellt werden können. Somit werden das Regelventil 125 durch die elektronische Regeleinrichtung 130 angesteuert, so dass über die elektronische Regeleinrichtung 130 die Drehzahl der jeweiligen Schleuderscheibe 113,114 einstellbar ist. In nicht dargestellter Weise sind in der elektronischen Regeleinrichtung 130 Daten über die Größe, Form und/oder Kontur des zu bestreuenden Feldes eingespeichert. Anhand dieser eingegebenen Daten ist dann mittels eines Standortbestimmungssystems, beispielsweise DGPS über die elektronische Regeleinrichtung 130 die Drehzahl der jeweiligen Schleuderscheiben 13, 14 einstellbar. Durch diese Art der standortspezifischen Steuer- und Regelungen kann der Düngerstreuer automatisch entsprechend eingestellt werden, d.h. es kann in automatischer Weise von Normalstreuen auf Grenzstreuen umgeschaltet werden. Des weiteren kann hierbei entsprechend die Drehzahl der jeweiligen Schleuderscheibe 113, 114 erhöht oder zurückgenommen werden, um die gewünschte Arbeitsbreite zu variieren, wenn die Arbeitsbreite verändert werden muss, da das Feld nicht geradlinig verläuft.

An Stelle des Antriebes der Schleuderscheiben 113, 114 über den Hydraulikmotoren 112 mit zugeordnetem Regelventil 125 ist es auch möglich, die Schleuderscheiben 113, 114 in nicht dargestellter Weise über ein drehzahlveränderbares mechanisches Getriebe, wie beispielsweise Zahnradgetriebe, Variatorgetriebe mit Keilriemen oder Gliederketten etc. anzutreiben. Somit lässt sich also auch bei einem mechanischen Antrieb, der von der Zapfwelle des Schleppers über eine Gelenkwelle antreibbar ist, mittels eines entsprechenden drehzahlveränderbaren mechanischen Getriebe die Drehzahl der Schleuderscheiben 113, 114 einstellen. Dem drehzahlveränderbaren mechanischen Getriebe ist eine motorisch betätigbare Einstellvorrichtung zugeordnet, die über die elektronische Regeleinrichtung 130 entsprechend angesteuert und eingeregelt werden kann.

## Patentansprüche

1. Schleuderdüngerstreuer mit einem Rahmen, Vorratsbehälter (1) und zumindest zwei Dosierorganen (4), unter denen rotierend angetriebene und mit Wurtschaufeln (15,16) besetzte Schleuderscheiben (5,13,14) angeordnet sind, wobei zumindest bei einer Schleuderscheibe zwei eine Doppelscheibe (5) bildende Schleuderscheiben (13,14), vorzugsweise unterschiedlichen Außendurchmessers übereinander angeordnet sind, wobei die obere Schleuderscheibe (13,14) eine mittige Aussparung (17,28) zur Durchleitung des auszubringenden Materials von den Dosierorganen (4) zu der unteren Schleuderscheibe (13,14) aufweist, **dadurch gekennzeichnet, dass** zwischen zumindest einem Dosierorgan (4) und zugeordneter Doppelscheibe (5) ein verstellbares Leitelement (18,24) derart angeordnet ist, dass wahlweise der oberen und/oder der unteren Schleuderscheibe (13,14) das zu dosierte Material zuleitbar ist.

2. Schleuderdüngerstreuer mit einem Rahmen, Vorratsbehälter (1) und zumindest zwei besetzte Schleuderscheiben (5,12,14) angeordnet sind, wobei zumindest bei einer Schleuderscheibe (13,14) zwei eine Doppelscheibe (5) bildende Schleuderscheiben (13,14), vorzugsweise unterschiedlichen Außendurchmessers übereinander angeordnet sind, wobei die obere Schleuderscheibe (13,14) eine mittige Aussparung (17) zur Durchleitung des auszubringenden Materials von den Dosierorganen (4) zu der unteren Schleuderscheibe (13,14) aufweist, **dadurch gekennzeichnet, dass** die Doppelscheibe (5) und/oder das Dosierorgan (4) derart zueinander verstellbar sind, dass wahlweise der oberen und/oder der unteren Schleuderscheibe (13,14) das zu dosierte Material zuleitbar ist.

3. Schleuderdüngerstreuer nach Anspruch-1, **dadurch gekennzeichnet, dass** die untere Schleuderscheibe (13,14) einen größeren Durchmesser als die obere Schleuderscheibe (13,14) aufweist.

4. Schleuderdüngerstreuer nach Anspruch 3, **dadurch gekennzeichnet, dass** die Wurfschaufeln (15,16) der unteren Schleuderscheibe (13,14) eine größere wirksame Außenumlaufbahn als die Wurfschaufeln (13,14) der oberen Schleuderscheibe (15,16) aufweisen.

5. Schleuderdüngerstreuer nach Anspruch 1, **dadurch gekennzeichnet, dass** die obere Schleuderscheibe (13) einen größeren Durchmesser als die untere Schleuderscheibe (14) aufweist.

6. Schleuderdüngerstreuer nach Anspruch 5, **dadurch gekennzeichnet, dass** die Wurfschaufeln (15) der oberen Schleuderscheibe (13) eine größere wirksame Außenumlaufbahn als die Wurfschaufeln (16) der unteren Schleuderscheibe (14) aufweisen.

7. Schleuderdüngerstreuer nach einem oder mehreren der vorstehenden Ansprüche, **dadurch gekennzeichnet, dass** die Schleuderscheiben (13,14) der Doppelscheibe (5) drehfest miteinander verbunden sind.

8. Schleuderdüngerstreuer nach Anspruch 7, **dadurch gekennzeichnet, dass** die Verbindungselemente zwischen den Scheiben (13,14) der Doppelscheibe (5) zumindest teilweise von den Wurfschaufeln (15,16) der unteren Schleuderscheibe (13,14) gebildet werden.

9. Schleuderdüngerstreuer nach einem oder mehreren der vorstehenden Ansprüche, **dadurch gekennzeichnet, dass** die kleinere Schleuderscheibe (14) der Doppelscheibe (5) als Grenzstreuscheibe ausgebildet ist, dass die größere Schleuderscheibe (13) als Normalstreuscheibe ausgebildet ist.

10. Schleuderdüngerstreuer nach Anspruch 1, **dadurch gekennzeichnet, dass** das Leitelement (24) um eine aufrechte Achse dreh- und/oder schwenkbar angeordnet ist.

11. Schleuderdüngerstreuer nach Anspruch 1, **dadurch gekennzeichnet, dass** das Leitelement (24) um eine horizontale Achse verschwenkbar angeordnet ist.

12. Schleuderdüngerstreuer nach Anspruch 1, **dadurch gekennzeichnet, dass** das Leitelement (18,24) verschiebbar angeordnet ist.

13. Schleuderdüngerstreuer nach einem oder mehreren der vorstehenden Ansprüche, **dadurch gekennzeichnet, dass** der unteren Schleuderscheibe (13,14) eine kegelförmige und nach oben ragende Erhöhung (18) zugeordnet ist, dass die aufrechte Mittelachse der kegelförmigen Erhöhung (18) mit der Drehachse der Doppelscheibe (5) zusammenfällt.

14. Schleuderdüngerstreuer nach Anspruch 1, **dadurch gekennzeichnet, dass** das Leitelement (24) mehrere den Materialstrom in Richtung der Schleuderscheibe (5) auffächemde Leitflächen aufweist.

15. Schleuderdüngerstreuer nach Anspruch 1, **dadurch gekennzeichnet, dass** das Leitelement (24) mehrere dem Materialstrom in Richtung der Schleuderscheibe (5) aufteilende Leitflächen aufweist.

16. Schleuderdüngerstreuer nach einem oder mehreren der vorstehenden Ansprüche, **dadurch gekennzeichnet, dass** das Leitelement an (24) dem Dosierorgan angeordnet ist.

17. Schleuderdüngerstreuer nach einem oder mehreren der vorstehenden Ansprüche, **dadurch gekennzeichnet, dass** das Leitelement (18) an der Schleuderscheibe (5) angeordnet ist.

18. Schleuderdüngerstreuer nach Anspruch 17, **dadurch gekennzeichnet, dass** das Leitelement (18) nach oben und unten verschiebbar angeordnet ist.

19. Schleuderdüngerstreuer nach Anspruch 1 **dadurch gekennzeichnet, dass** Mittel (125,130) vorgesehen sind, mittels derer zumindest eine der Schleuderscheiben (113,114) mit einstellbaren Drehzahlen antreibbar sind.

20. Schleuderdüngerstreuer nach Anspruch 19, **dadurch gekennzeichnet, dass** die Mittel (125) als in ihrer Drehzahl einstellbare Hydraulikmotoren (112) und/oder -pumpen mit entsprechender Regeleinrichtung (130) ausgebildet sind.

21. Schleuderdüngerstreuer nach Anspruch 19, **dadurch gekennzeichnet, dass** die Mittel als drehzahlveränderbares mechanisches Getriebe, wie beispielweise Zahnradgetriebe Variatorgetriebe mit Keilriemen oder Gliederketten etc. ausgebildet ist.

22. Schleuderdüngerstreuer nach Anspruch 19, **dadurch gekennzeichnet, dass** die Mittel (125) mittels einer elektronischen Regeleinrichtung (130) ansteuerbar sind, dass mittels der elektronischen Regeleinrichtung (130) die Drehzahl der jeweiligen Schleuderscheibe (113,114) einstellbar ist.

23. Schleuderdüngerstreuer nach Anspruch 22, **dadurch gekennzeichnet, dass** in der elektronischen Regeleinrichtung (130) Daten über die Größe, Form und/oder Kontur des Feldes eingespeichert sind und das an Hand dieser gegebenen Daten mittels eines Standortbestimmungssystems (beispielsweise DGPS) über die elektronische Regeleinrichtung (130) die Drehzahl der jeweiligen Schleuderscheiben (113,114) einstellbar ist.

## Claims

1. Centrifugal fertilizer distributor including a frame, hopper (1) and at least two metering members (4), below which are disposed centrifugal discs (5, 13, 14), which are rotary-driven and are provided with throwing vanes (15, 16), wherein, at least in the case of one centrifugal disc, two centrifugal discs (13, 14), which preferably have different outer diameters, forming one double disc (5) are disposed one above the other, wherein the upper centrifugal disc (13, 14) includes a central recess (17, 28) for the through-passage of the material to be distributed from the metering members (4) to the lower centrifugal disc (13, 14), **characterised in that** an adjustable guiding element (18, 24) is disposed between at least one metering member (4) and the associated double disc (5) in such a manner that the material to be metered can be supplied in an arbitrary manner to the upper and/or the lower centrifugal disc (13, 14).

2. Centrifugal fertiliser spreader including a frame, hopper (1) and at least two metering members (4), below which are disposed centrifugal discs (5, 12, 14), which are rotary-driven and are provided with throwing vanes (15, 16), wherein, at least in the case of one centrifugal disc (13, 14), two centrifugal discs (13, 14), preferably with different outer diameters, forming one double disc (5) are disposed one above the other, wherein the upper centrifugal disc (13, 14) includes a central recess (17) for the through-passage of the material to be distributed from the metering members (4) to the lower centrifugal disc (13, 14), **characterised in that** the double disc (5) and/or the metering member (4) are adjustable one relative to the other in such a manner that the material to be metered can be supplied in an arbitrary manner to the upper and/or the lower centrifugal disc (13, 14).

3. Centrifugal fertiliser spreader according to claim 1, **characterised in that** the diameter of the lower centrifugal disc (13, 14) is greater than the diameter of the upper centrifugal disc (13, 14).

4. Centrifugal fertiliser spreader according to claim 3, **characterised in that** the throwing vanes (15, 16) of the lower centrifugal disc (13, 14) have a larger effective outer circular path than the throwing vanes (13, 14) of the upper centrifugal disc (15, 16).

5. Centrifugal fertiliser spreader according to claim 1, **characterised in that** the diameter of the upper centrifugal disc (13) is larger than the diameter of the lower centrifugal disc (14).

6. Centrifugal fertiliser spreader according to claim 5, **characterised in that** the throwing vanes (15) of the upper centrifugal disc (13) have a greater effective outer circular path that the throwing vanes (16) of the lower centrifugal disc (14).

7. Centrifugal fertiliser spreader according to one or several of the above claims, **characterised in that** the centrifugal discs (13, 14) of the double disc (5) are interconnected so as to be non rotatable.

8. Centrifugal fertiliser spreader according to claim 7, **characterised in that** the connecting elements between the discs (13, 14) of the double disc (5) are formed at least partially by the throwing vanes (15, 16) of the lower centrifugal disc (13, 14).

9. Centrifugal fertiliser spreader according to one or several of the above claims, **characterised in that** the smaller centrifugal disc (14) of the double disc (5) is in the form of a limited spreading disc, **in that** the larger centrifugal disc (13) is in the form of a normal spreading disc.

10. Centrifugal fertiliser spreader according to claim 1, **characterised in that** the guiding element (24) is disposed so as to be rotatable and/or pivotable about a vertical axis.

11. Centrifugal fertiliser spreader according to claim 1, **characterised in that** the guiding element (24) is disposed so as to be pivotable about a horizontal axis.

12. Centrifugal fertiliser spreader according to claim 1, **characterised in that** the guiding element (18, 24) is disposed to as to be displaceable.

13. Centrifugal fertiliser spreader according to one or several of the above claims, **characterised in that** an upwardly projecting, cone-shaped elevation (18) is associated with the lower centrifugal disc (13,14), **in that** the vertical central axis of the cone-shaped elevation (18) coincides with the axis of rotation of the double disc (5).

14. Centrifugal fertiliser spreader according to claim 1, **characterised in that** the guiding element (24) includes a plurality of guide faces, which fan the material flow out in the direction of the centrifugal disc (5).

15. Centrifugal fertiliser spreader according to claim 1, **characterised in that** the guiding element (24) includes a plurality of guide faces, which split up the material flow in the direction of the centrifugal disc (5).

16. Centrifugal fertiliser spreader according to one or more of the above claims, **characterised in that** the guiding element (24) is disposed at the metering member.

17. Centrifugal fertiliser spreader according to one or several of the above claims, **characterised in that** the guiding element (18) is disposed at the centrifugal disc (5).

18. Centrifugal fertiliser spreader according to claim 17, **characterised in that** the guiding element (18) is disposed so as to be displaceable up and down.

19. Centrifugal fertiliser spreader according to claim 1, **characterised in that** means (125, 130) are provided, by means of which at least one of the centrifugal discs (113, 114) is driveable at adjustable speeds.

20. Centrifugal fertiliser spreader according to claim 19, **characterised in that** the means (125) are in the form of speed-adjustable, hydraulic motors (112) and/or pumps with a corresponding regulating device (130).

21. Centrifugal fertiliser spreader according to claim 19, **characterised in that** the means are in the form of variable-speed mechanical gearing, such as, for example, toothed gearing, variable speed gearing with V-belts or link chains etc.

22. Centrifugal fertiliser spreader according to claim 19, **characterised in that** the means (125) are controllable by means of an electronic regulating device (130), **in that** the speed of the respective centrifugal disc (113, 114) is adjustable by means of the electronic regulating device (130).

23. Centrifugal fertiliser spreader according to claim 22, **characterised in that** data on the size, shape and/or outline of the field is stored in the electronic regulating device (130) and **in that** the speed of the respective centrifugal disc (113, 114) is adjustable via the electronic regulating device (130) by way of this given data by means of a position finding system (for example DGPS).

## Revendications

1. Epandeur centrifuge comportant un châssis, un réservoir (1) et au moins deux organes de dosage (4) sous lesquels sont installés des disques d'épandage (5, 13, 14) entraînés en rotation et garnis de palettes d'éjection (15, 16),
dont au moins l'un des disques d'épandage se compose de deux disques d'épandage (13, 14), de préférence de diamètres extérieurs différents, formant un double disque (5),
le disque supérieur (13, 14) ayant une ouverture centrale (17, 28) pour le passage de la matière à distribuer provenant des organes de dosage (4) pour arriver aux disques d'épandage (13, 14) inférieurs,
**caractérisé en ce qu'**
un élément de guidage réglable (18, 24) est installé entre au moins un organe de dosage (4) et le double disque (5) associé de façon à pouvoir conduire au choix la matière à doser vers le disque d'épandage supérieur et/ou le disque d'épandage inférieur (13, 14).

2. Epandeur centrifuge d'engrais comportant un châssis, un réservoir (1) et au moins deux organes de dosage (4) sous lesquels sont installés des disques d'épandage (5, 12, 14) entraînés en rotation et garnis de palettes d'éjection (15, 16),
au moins l'un des disques d'épandage (13, 14) comportant deux disques (13, 14), de préférence de diamètres extérieurs différents, superposés pour former un double disque (5),
le disque d'épandage (13, 14) supérieur ayant une ouverture centrale (17) pour le passage de la matière à distribuer en provenance des organes de dosage (4) vers le disque d'épandage (13, 14) inférieur,
**caractérisé en ce que**
le double disque (5) et/ou l'organe de dosage (4) sont réglables l'un par rapport à l'autre pour permettre de fournir la matière à doser au choix au disque d'épandage supérieur et/ou au disque d'épandage inférieur (13, 14).

3. Epandeur centrifuge d'engrais selon la revendication 1,
**caractérisé en ce que**
le disque d'épandage inférieur (13, 14) a un diamètre plus grand que le disque d'épandage supérieur (13, 14).

4. Epandeur centrifuge d'engrais selon la revendication 3,
**caractérisé en ce que**
les palettes d'éjection (15, 16) du disque d'épandage inférieur (13, 14) ont une trajectoire périphérique extérieure active plus grande que les palettes d'éjection (13, 14) du disque d'épandage supérieur (15, 16).

5. Epandeur centrifuge d'engrais selon la revendication 1,
**caractérisé en ce que**
le disque d'épandage supérieur (13) a un diamètre plus grand que le disque d'épandage inférieur (14).

6. Epandeur centrifuge d'engrais selon la revendication 5,
**caractérisé en ce que**
les palettes d'éjection (15) du disque d'épandage supérieur (13) ont une trajectoire extérieure périphérique active plus grande que les palettes d'éjection (16) du disque d'épandage inférieur (14).

7. Epandeur centrifuge d'engrais selon une ou plusieurs des revendications précédentes,
**caractérisé en ce que**
les disques d'épandage (13, 14) du double disque (5) sont solidaires en rotation.

8. Epandeur centrifuge d'engrais selon la revendication 7,
**caractérisé en ce que**
les éléments de liaison entre les disques (13, 14) formant le double disque (5) sont constitués au moins en partie par les palettes d'éjection (15, 16) du disque d'épandage inférieur (13, 14).

9. Epandeur centrifuge d'engrais selon une ou plusieurs des revendications précédentes,
**caractérisé en ce que**
le disque d'épandage inférieur (14) du double disque (5) est en forme de disque d'épandage en limite et le plus grand disque d'épandage (13) est un disque d'épandage normal.

10. Epandeur centrifuge d'engrais selon la revendications 1,
**caractérisé en ce que**
l'élément de guidage (24) est monté à rotation et/ou en pivotement autour d'un axe montant.

11. Epandeur centrifuge d'engrais selon la revendications 1,
**caractérisé en ce que**
l'élément de guidage (24) pivote autour d'un axe horizontal.

12. Epandeur centrifuge d'engrais selon la revendications 1,
**caractérisé en ce que**
l'élément de guidage (18, 24) est coulissant.

13. Epandeur centrifuge d'engrais selon une ou plusieurs des revendications précédentes,
**caractérisé en ce que**
le disque d'épandage inférieur (13, 14) a un bossage (18) tronconique, dirigé vers le haut, et l'axe central montant du bossage tronconique (18) coïncide avec l'axe de rotation du double disque (5).

14. Epandeur centrifuge d'engrais selon la revendications 1,
**caractérisé en ce que**
l'élément de guidage (24) comporte plusieurs surfaces de guidage étalant le flux de matière en éventail en direction du disque d'épandage (5).

15. Epandeur centrifuge d'engrais selon la revendication 1,
**caractérisé en ce que**
l'élément de guidage (24) comporte plusieurs surfaces de guidage répartissant le flux de matière en direction du disque d'épandage (5).

16. Epandeur centrifuge d'engrais selon une ou plusieurs des revendications précédentes,
**caractérisé en ce que**
l'élément de guidage (24) est installé sur l'organe de dosage.

17. Epandeur centrifuge d'engrais selon une ou plusieurs des revendications précédentes,
**caractérisé en ce que**
l'élément de guidage (18) est installé sur le disque d'épandage (5).

18. Epandeur centrifuge d'engrais selon la revendication 17,
**caractérisé en ce que**
l'élément de guidage (18) est coulissant vers le haut et vers le bas.

19. Epandeur centrifuge d'engrais selon la revendication 1,
**caractérisé par**
des moyens (125, 130) pour entraîner au moins l'un des disques d'épandage (113, 114) à une vitesse de rotation réglable.

20. Epandeur centrifuge d'engrais selon la revendication 19,
**caractérisé en ce que**
les moyens (125) sont réalisés sous la forme de moteurs et/ou de pompes hydrauliques (112) de vitesse de rotation réglable comportant une installation de régulation (130) correspondante.

21. Epandeur centrifuge d'engrais selon la revendication 19,
**caractérisé en ce que**
les moyens sont réalisés sous la forme d'une transmission mécanique à vitesse de rotation variable comme une transmission à roue dentée, un variateur à courroie trapézoïdale ou chaîne à maillons, etc...

22. Epandeur centrifuge d'engrais selon la revendication 19,
**caractérisé en ce que**
les moyens (125) sont commandés par une installation de régulation électronique (130) et cette installation de régulation électronique (130) permet de régler la vitesse de rotation du disque d'épandage (113, 114) respectif.

23. Epandeur centrifuge d'engrais selon la revendication 22,
**caractérisé en ce que**
l'installation de régulation électronique (130) contient en mémoire les données relatives à la dimension, la forme et/ou le contour du champ, et on peut régler la vitesse de rotation des disques d'épandage (113, 114) respectifs en fonction de ces données à l'aide d'un système de localisation (par exemple le système DGPS) par l'installation de régulation électronique (130).
